# EUROPÄISCHE PATENTSCHRIFT

(11) **EP 2 821 212 B1**
(45) Veröffentlichungstag und Bekanntmachung des Hinweises auf die Patenterteilung: **23.08.2017**
(21) Anmeldenummer: 14168387.0
(22) Anmeldetag: 15.05.2014
(51) Int. Cl.: B29D 30/06, B60C 11/12

(54) **Reifenheizform**
Heating mould for tyres
Moule de chauffage de pneumatique

(30) Priorität: 01.07.2013 DE 102013106885
(43) Veröffentlichungstag der Anmeldung: 07.01.2015
(73) Patentinhaber: Continental Reifen Deutschland GmbH, 30165 Hannover (DE)
(72) Erfinder: Weber, Christian, 30826 Garbsen (DE); Torbrügge, Thorsten, 30855 Langenhagen (DE); Noga, Mareile, 30171 Hannover (DE); Seng, Matthias, 30449 Hannover (DE)
(74) Vertreter: Finger, Karsten

(56) Entgegenhaltungen:
- WO-A1-2007/017991
- DE-A1-102008 034 004
- JP-A- H0 234 409
- JP-A- 2002 316 328

## Beschreibung

Die Erfindung betrifft eine Reifenheizform mit einem Segmentring, welcher aus mindestens sechs Formsegmenten zusammengesetzt ist, in welchen Lamellenbleche verankert sind, die im Laufstreifen eines Fahrzeugluftreifens schmale Einschnitte mit einer Breite von 0,4 mm bis 0,8 mm ausformen, die sich unter Winkeln ≤ 45° zur axialen Richtung im Laufstreifen erstrecken, wobei die Formsegmente in ihrer Mitte zum Öffnen und Schließen in radialer Richtung bewegbar sind.

Es ist bekannt, dass das Entformen von mit Formstegen und Lamellenblechen der Reifenheizform gebildeten Querrillen und Einschnitten in Bereichen, die von den Formsegmentmitten weiter entfernt sind, höhere Kräfte erfordert als das Entformen im mittleren Bereich der Formsegmente. Formstege und Lamellenbleche, die nahe von Formsegmentgrenzen liegen, weisen, da sie üblicherweise in radialer Richtung angeordnet werden, eine Orientierung auf, die von der Auszugsrichtung des jeweiligen Formsegmentes abweicht. Beim Entformen werden daher die Profilpositive nahe der Formsegmentgrenzen stärker deformiert als jene im mittleren Bereich der Formsegmente und es muss ein Verkanten zwischen Formstegen und Lamellenblechen einerseits und den Profilpositiven andererseits überwunden werden. Dieses Verkanten kann vor allem im Bereich des Grundes der Querrillen im Gummimaterial das Entstehen von Einrissen begünstigen. Besonders hoch sind die Entformungskräfte bei Winterreifen, da diese in Reifenheizformen mit einer großen Anzahl von Lamellenblechen vulkanisiert werden und da die Laufstreifenmischungen für solche Reifen relativ stark an der Heizform kleben. Höhere Kräfte erfordert auch das Entformen von Formstegen und Lamellenblechen von Profilpositiven im mittleren Bereich des Laufstreifens, da hier die Profilpositive eine geringere Beweglichkeit aufweisen als jene in der Nähe der Seitenwände, sowie von Profilpositiven, die mit einem Carboncenterbeam (CCB) versehen sind, da diese aus einer Gummimischung bestehen, die steifer ist als die übrige Laufstreifenmischung. Carboncenterbeams sind lokal im Laufstreifen, insbesondere über den gesamten Umfang, eingebaute Gummimischungsstreifen aus einer elektrisch leitfähigen Gummimischung, die dann im Laufstreifen vorgesehen werden, wenn dieser ansonsten aus einer elektrisch nicht oder nur sehr gering leitfähigen Gummimischung hergestellt wird, beispielsweise einer Mischung, die einen relativ hohe Anteil an SiO₂ (Silica) enthält.

Aus der DE 41 14 279 C2 ist eine Reifenheizform bekannt, deren die Rillen formenden Formstege derart ausgeführt sind, dass die Nutflanken bildenden Flächen Rillentäler und Rillenberge aufweisen, deren Erstreckung parallel zur Bewegungsrichtung des jeweiligen Formsegmentes ist. Damit soll der kleinstmögliche Widerstand beim Entformen der geheizten Reifen aus der Vulkanisationsform erzielt werden und eine Erhöhung der Rissgefährdung vermieden werden.

Aus der WO 2007/017991 A1 ist eine Reifenheizform mit Lamellenblechen zum Ausformen von Einschnitten im Laufstreifen bekannt, wobei nahe der Formsegmentgrenzen Lamellenbleche vorgesehen sind, welche gegenüber der axialen Richtung geneigt sind. Die sonstigen Lamellenbleche verlaufen hingegen in axialer Richtung.

Aus der JP 2002 316 328 A ist eine weitere Reifenheizform mit Einschnitte ausformenden Lamellenblechen bekannt, wobei den Formsegmentgrenzen unmittelbar benachbart positionierte Lamellenbleche in Auszugsrichtung orientiert sind.

Aus der DE 10 2008 034 004 A1 ist eine Reifenheizform bekannt, deren Formsegmente mit Querrillen ausformenden Rippen versehen sind. Die nahe der Formsegmentgrenzen angeordneten Rippen sind in Auszugsrichtung orientiert.

Der Erfindung liegt die Aufgabe zu Grunde, eine Reifenheizform der eingangs genannten Art derart auszuführen, dass die durch die nahe von Formsegmentgrenzen positionierten Lamellenbleche verursachten höheren Entformungskräfte verringert sind und ein Verkanten zumindest so weit vermieden wird, dass die Gefahr des Entstehens von Einrissen in Profilpositiven, etwa Profilblöcken, vermindert ist.

Gelöst wird die gestellte Aufgabe erfindungsgemäß dadurch, dass nahe von Formsegmentgrenzen in einem Bereich von bis zu 25% der Umfangslänge des betreffenden Formsegmentes, ermittelt ab der Formsegmentgrenze, Lamellenbleche angeordnet sind, die im Vergleich zu den ansonsten in der Reifenheizform bzw. im betreffenden Formsegment verankerten Lamellenblechen eines oder mehrere der folgenden Merkmale aufweisen:
- eine geringere Kontaktfläche zum Laufstreifengummi,
- ein flexibleres Material,
- eine flexible Verankerung im Formsegment
- eine Verdickung an ihrem freien Endabschnitt.

Die Erfindung zeigt daher eine Anzahl von Alternativen auf, mittels welchen ein Verkanten der Lamellenbleche mit dem Gummimaterial des vulkanisierten Laufstreifens zumindest so weit reduziert werden kann, dass ein Entformen der Lamellenbleche ohne Gefahr des Entstehens von Einrissen in den Profilpositiven möglich ist.

Es gibt eine Anzahl von Möglichkeiten, auf einfache Weise Lamellenbleche mit einer geringeren Kontaktfläche zum Laufstreifengummi auszuführen. So können beispielsweise nahe von Formsegmentgrenzen Lamellenbleche vorgesehen werden, welche kürzer ausgeführt sind als die ansonsten vorgesehenen Lamellenbleche. Ein derartiges Lamellenblech wird um mindestens 20%, insbesondere um bis zu 40%, kürzer ausgeführt als die ansonsten vorgesehenen Lamellenbleche. Eine geringere Kontaktfläche zum Laufstreifengummi weisen auch Lamellenbleche auf, die geringer strukturiert sind als die ansonsten vorgesehenen Lamellenbleche. Unter geringerer Strukturierung ist beispielsweise zu verstehen, dass eine etwaige Prägung der Lamellenbleche mit Erhebungen und Vertiefungen derart ausgeführt wird, dass die Erhebungen und Vertiefungen eine geringere Höhe aufweisen, es kann aber auch die Anzahl der in der Prägung vorgesehenen Erhebungen und Vertiefungen verringert sein. Alternativ ist es möglich, die nahe von Formsegmentgrenzen im Formsegment eingesetzten Lamellenbleche glatt, also ohne Prägung, auszuführen.

Eine geringere Kontaktfläche zum Laufstreifengummi weisen ferner Lamellenbleche auf, die eine geringere axiale Erstreckung als die ansonsten vorgesehenen Lamellenbleche besitzen. Die Erstreckungslänge ist um mind. 20%, insbesondere um bis zu 40%, kleiner als jene der ansonsten vorgesehenen Lamellenbleche. Lamellenbleche mit geringerer Erstreckung erzeugen im Laufstreifen kürzere Einschnitte.

Lamellenbleche aus einem flexiblen Material lassen sich ebenfalls leichter entformen, als Lamellenbleche aus Stahlblech. Als flexibles Material kommt beispielsweise ein flexibler bzw. elastischer Kunststoff in Frage.

Wie bereits erwähnt ist bei einer weiteren möglichen Variante der Erfindung am freien Ende des Lamellenbleches eine Verdickung ausgebildet. Diese Verdickung kann, im Querschnitt des Lamellenbleches betrachtet, tropfenförmig, dreieckig oder dergleichen ausgeführt sein und weist eine Breite von 1 mm bis 2 mm auf. Beim Entformen des fertig vulkanisierten Reifens löst sich das Gummimaterial von den Verdickungen leichter und schneller als von den sonstigen Lamellenblechbereichen. Dies erleichtert insgesamt das Loslösen des Gummimaterials vom Lamellenblech.

Für die Verringerung der Entformungskräfte ist es ferner von Vorteil, wenn jene Lamellenbleche, welche an einer Formsegmentgrenze in einem Bereich von bis zu 15%, der Umfangslänge des betroffenen Formsegmentes angeordnet sind, eine oder mehrere der erwähnten Besonderheiten aufweisen.

Sind in einer Reifenheizform Lamellenbleche vorgesehen, die in Profilpositiven Einschnitte formen, die einen Carboncenterbeam beinhalten, so werden bevorzugt jene dieser Lamellenbereiche, die nahe einer Formsegmentgrenze angeordnet sind, gemäß der Erfindung ausgeführt. Da Carboncenterbeams aus einer Gummimischung bestehen, die üblicherweise steifer ist als die übrige Laufstreifenmischung, weisen die Profilblöcke bzw. Profilpositive mit einem Carboncenterbeam eine geringere Beweglichkeit auf, was ein Entformen erschwert. Es ist daher besonders günstig, gerade in solchen Profilpositiven durch erfindungsgemäße Maßnahmen eine leichtere Entformung zu ermöglichen.

Höhere Kräfte erfordert auch das Entformen von Lamellenblechen aus Profilpositiven, die im mittleren Bereich des Laufstreifen geformt werden, da diese Profilpositive eine geringere Beweglichkeit besitzen, als jene in der Nähe der Schulterbereiche des Laufstreifens. Lamellenbleche, welche nahe vom Formsegmentgrenzen Einschnitte im mittleren, bis zu 75%, insbesondere bis zu 60%, vorzugsweise bis zu 40%, der Laufstreifenbreite einnehmenden Bereich des Laufstreifens formen, werden daher ebenfalls vorteilhafterweise gemäß der Erfindung ausgeführt. Ebenfalls offenbart ist ein Fahrzeugluftreifen, welcher in einer erfindungsgemäßen Reifenheizform vulkanisiert worden ist.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Querschnitt durch einen Teilbereich einer Reifenheizform,
Fig. 2 einen Längsschnitt durch ein Formsegment und von Abschnitten anschließender Formsegmente,
Fig. 3 bis Fig. 6 Längsschnitte durch Formsegmentabschnitte mit unterschiedlichen Ausführungsvarianten der Erfindung und
Fig. 7 eine Ansicht einiger Profilblöcke eines Laufstreifens eines Fahrzeugluftreifens.

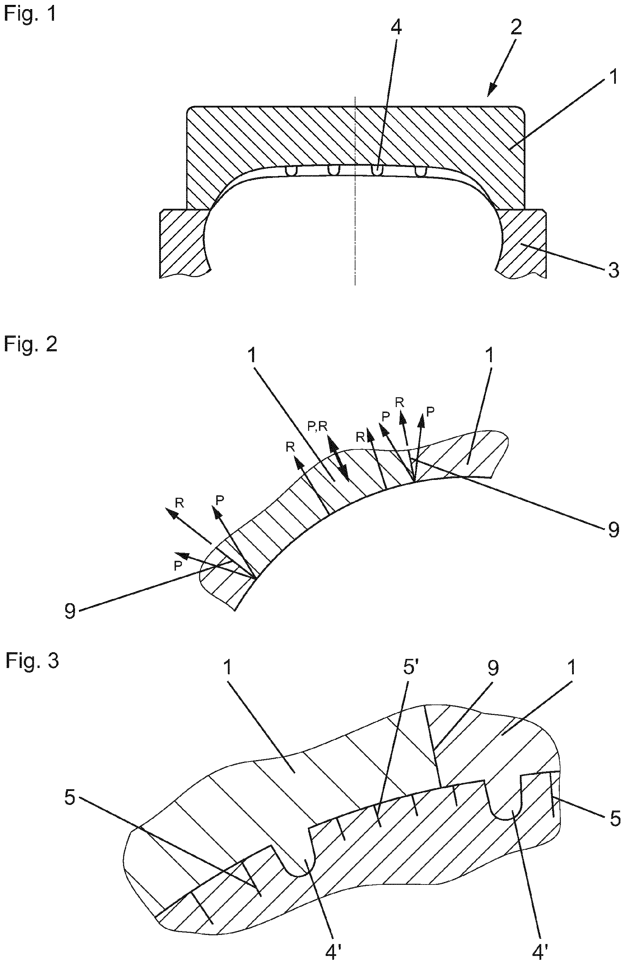

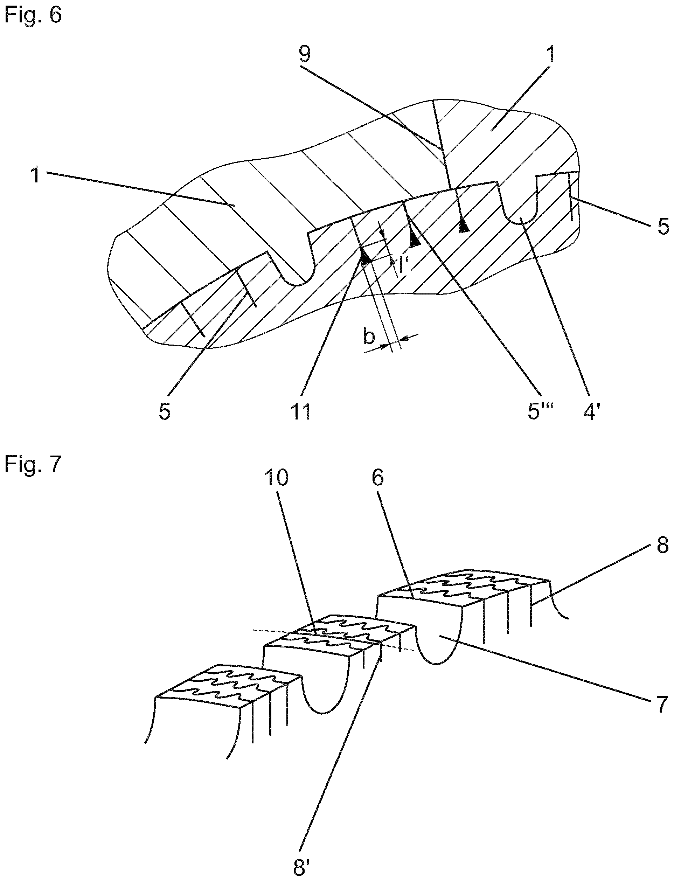

Fig. 1 zeigt von den Bestandteilen einer Reifenheizform, welche zur Profilgebung und Vulkanisation von Fahrzeugluftreifen, beispielsweise Reifen für Personenkraftwagen, vorgesehen ist, einen aus Formsegmenten 1 zusammengesetzten Segmentring 2 und Abschnitte von Seitenwandschalen 3. Die beiden Seitenwandschalen 3 sind von außen betrachtet im Wesentlichen kreisringförmig, ihre Innenflächen bilden bzw. formen die äußeren, ebenfalls kreisringförmig umlaufenden Seitenwandflächen eines Fahrzeugluftreifens. Der Segmentring 2 setzt sich aus sechs bis vierzehn Formsegmenten 1 zusammen und formt den profilierten Laufstreifen des Fahrzeugluftreifens. Zu diesem Zweck sind an den Innenflächen der Formsegmente 1, wie es etwa Fig. 1 und Fig. 3 zeigen, beispielsweise Formstege 4, 4' vorhanden, welche im Laufstreifen Umfangsrillen und Querrillen ausformen. Insbesondere Reifen, die für den Einsatz unter winterlichen Fahrbedingungen, wie Schnee und Eis, besonders gut geeignet sind, weisen im Laufstreifen eine Vielzahl von schmalen, vorzugsweise 0,4 mm bis 0,8 mm breiten Einschnitten auf, die sich insbesondere unter Winkeln von bis zu 45° zur axialen Richtung erstrecken und die mittels Lamellenblechen, die an den Innenflächen der Formsegmente 1 abstehen und in den Formsegmenten 1 verankert sind, erstellt werden. Querrillen verlaufen im Laufstreifen eines Reifens üblicherweise entweder gerade oder leicht bogenförmig gekrümmt und ebenfalls unter einem Winkel von bis zu 45° zur axialen Richtung. Sie erstrecken sich entweder zwischen Profilblöcken einer Profilblockreihe oder verlaufen ausgehend von einer Umfangsrille in ein Profilband hinein und enden innerhalb des Profilbandes. Fig. 7 zeigt beispielhaft eine Profilblockreihe, deren Profilblöcke 6 durch Querrillen 7 voneinander getrennt sind und die jeweils mit einer Anzahl von sich parallel zu den Querrillen 7 erstreckenden, in Draufsicht wellenförmig bzw. zickzackförmig verlaufenden Einschnitten 8, 8' versehen sind, die durch Lamellenbleche 5, 5', wie noch beschrieben wird, erzeugt worden sind.

Fig. 2 zeigt anhand eines schematischen Längsschnittes (in Umfangsrichtung) durch ein Formsegment 1 und durch Abschnitte der beiden anschließender Formsegmente 1 beispielhaft zwei Formsegmentgrenzen 9. Die Formsegmente 1 kontaktieren einander bei geschlossener Reifenheizform an den Formsegmentgrenzen 9 mit ihren stirnseitigen Grenzflächen, welche üblicherweise ebene Flächen sind, die in axialer und radialer Richtung orientiert sind. Wie in Fig. 7 angedeutet ist, sind die Formsegmentgrenzen 9 am fertigen Reifen im Laufstreifen als kleine, in axialer Richtung verlaufende schmale Erhebungen 10 zu erkennen. In Fig. 2 ist die Bewegungsrichtung der Formsegmente 1 beim Öffnen der Reifenheizform durch Pfeile P gekennzeichnet, die radiale Richtung durch Pfeile R. Das Öffnen erfolgt derart, dass die Formsegmente 1 in ihrer Mitte radial bewegt werden. Je größer der Abstand von der Formsegmentmitte ist, umso mehr weicht die Öffnungsrichtung P von der radialen Richtung R ab, wobei bei den Formsegmentgrenzen 9 die Öffnungsrichtung P am meisten von der radialen Richtung R abweicht.

Die Figuren 3, 5 und 6 zeigen die nahe einer Formsegmentgrenze 9 befindlichen Abschnitte zweier Formsegmente 1, die hier Profilblöcke 6 ausformen. Dargestellt sind jeweils zwei Formstege 4', von welchen jeweils einer an einem der Formsegmente 1 angeordnet ist. Zwischen den beiden Formstegen 4' ist eine Anzahl von Lamellenblechen 5', 5". 5"', hier beispielhaft drei oder vier, in den Formsegmenten 1 verankert.

Die Erfindung befasst sich mit Maßnahmen, die das Entformen von Lamellenblechen, die nahe einer Formsegmentgrenze angeordnet sind, erleichtern. Vorab wird darauf verwiesen, dass die Lamellenbleche grundsätzlich derart gestaltet sein können, dass sie alle Arten von Einschnitten bilden können, beispielsweise Einschnitte, die wellen- oder zickzackförmig verlaufen, Einschnitte, die gerade verlaufen, Einschnitte, die, in radialer Richtung betrachtet, unterschiedlich tiefe Abschnitte aufweisen, ferner sogenannte 3D-Einschnitte - dies sind Einschnitte, die aus Lamellenblechen hergestellt sind, die mit Vertiefungen, Erhebungen und dergleichen geprägt sind - und dergleichen.

Fig. 3 zeigt eine erste Ausführungsform der Erfindung, bei der die nahe der Formsegmentgrenze 9 verankerten Lamellenbleche 5' kürzer ausgeführt sind als die von der Formsegmentgrenze 9 weiter entfernt befindlichen Lamellenbleche 5. Die "Verkürzung" betrifft das gesamte Lamellenblech 5', wobei die Lamellenbleche 5' um 10 % bis 80 %, insbesondere 20 % bis 60 %, vorzugsweise 25 % bis 50 %, kürzer sind als die anderen in der Reifenheizform angeordneten Lamellenbleche 5. Dadurch ist die Kontaktfläche der Lamellenbleche 5' zum Gummimaterial des Laufstreifens gegenüber der Kontaktfläche der Lamellenbleche 5 reduziert. Eine weitere, zusätzliche oder alternative, nicht dargestellte Maßnahme, mit welcher die Kontaktfläche der Lamellenbleche 5' bei oder nahe der Formsegmentgrenzen 9 reduziert wird, wird mit Lamellenblechen erreicht, die geringer strukturiert sind als die ansonsten vorgesehenen Lamellenbleche. Beispielsweise können die Lamellenbleche an oder nahe von Formsegmentgrenzen eine unstrukturierte, glatte Oberfläche aufweisen, während die ansonsten vorgesehenen Lamellenbleche mit einer Prägung aus Erhebungen und Vertiefungen versehen sind.

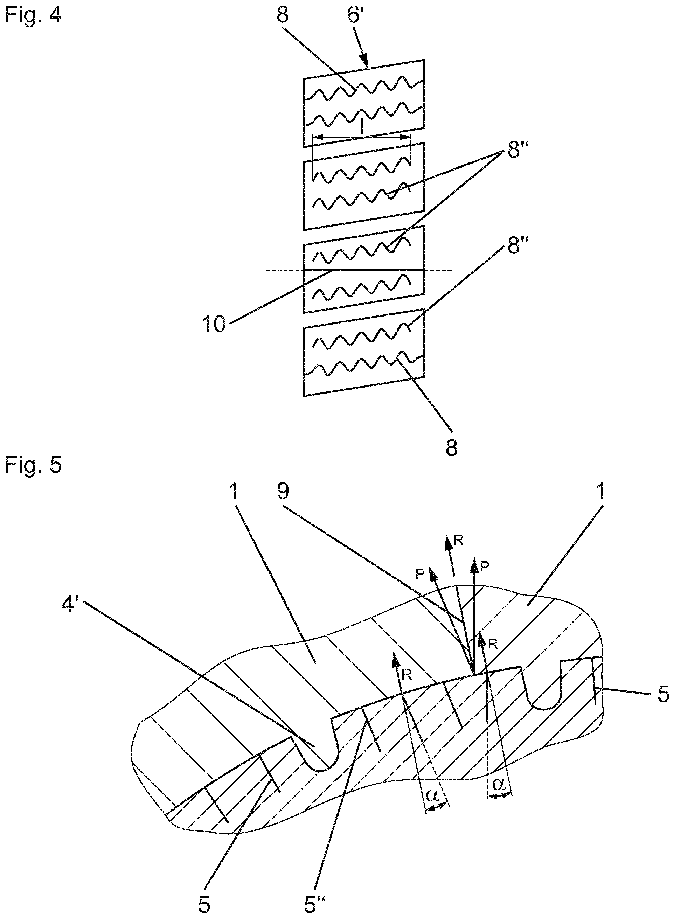

Bei einer weiteren Ausführungsform der Erfindung sind bei oder nahe der Formsegmentgrenze 9 Lamellenbleche vorgesehen, welche Einschnitte in Profilblöcken im Laufstreifen formen, deren axiale Erstreckung geringer ist als jene von Einschnitten, die sich in Profilblöcken in jenem Umfangsteil des Laufstreifens befinden, welcher vom betreffenden Formsegment in größerer Entfernung von den Formsegmentgrenzen gebildet wird. Fig. 4 zeigt schematisch und beispielhaft derart gebildete Einschnitte 8" in Profilblöcken 6' einer Profilblockreihe. Mit 10 ist die an der Formsegmentgrenze gebildete schmale Erhebung im Laufstreifen gekennzeichnet. Die Einschnitte 8" weisen eine Erstreckungslänge 1 auf, die um mindestens 20 %, insbesondere bis zu 40 %, geringer ist als die Erstreckungslänge der "normalen" Einschnitte 8.

Bei der in Fig. 5 gezeigten Ausführungsvariante sind die bei der Formsegmentgrenze 9 angeordneten Lamellenbleche 5" nicht in radialer Richtung R sondern in oder zur Auszugsrichtung P weisend orientiert, wodurch die Gefahr eines Verkantens beim Entformen wesentlich verringert wird. Unter "in Auszugsrichtung" ist eine Anordnung der Lamellenbleche 5" unter einem Winkel α zur radialen Richtung R zu verstehen, der mindestens 5°, vorzugsweise mindestens 10°, beträgt.

Eine weitere, nicht dargestellte Ausführungsvariante besteht darin, nahe der Formsegmentgrenzen 9 Lamellenbleche in den Formsegmenten 1 zu verankern, die aus einem flexibleren Material bestehen als die ansonsten in der Reifenheizform verankerten Lamellenbleche. So können beispielsweise die nahe von Formsegmentgrenzen 9 angeordneten Lamellenbleche aus flexiblen bzw. elastischen Kunststoffen bestehen, wobei die üblichen Lamellenbleche aus dünnem Stahlblech gefertigt sind. Auch durch diese Maßnahme wird die Gefahr eines Verkantens beim Entformen verringert. Dieser Effekt lässt sich auch bei einer weiteren Ausführungsform erzielen, bei der die Lamellenbleche nahe der Formsegmentgrenzen 9 beweglich verankert werden, beispielsweise mittels scharnierartiger beweglicher Verankerungselementen oder -abschnitten aus Metall oder Kunststoff.

Fig. 6 zeigt eine Ausführungsform mit Lamellenblechen 5'" nahe den Formsegmentgrenzen 9, die an ihren freien Endabschnitten jeweils eine Verdickung 11 aufweisen. Die Verdickungen 11 können im Querschnitt im Wesentlichen eine Dreieckform, eine Tropfenform oder dergleichen aufweisen, ihre Querschnittsbreite b beträgt 1 mm bis 2 mm, ihre Erstreckungslänge 1' zumindest ihrer Breite und bis zu 30 % der radialen Erstreckung des Lamellenbleches 5"'. Beim Entformen löst sich das Gummimaterial von den Verdickungen 11 leichter und schneller als von den sonstigen Lamellenblechbereichen. Dadurch wird insgesamt das Loslösen des Gummimaterials vom Lamellenblech 5'" erleichtert.

Die dargestellten und/oder beschriebenen Ausführungsvarianten können bei einem Lamellenblech und auch in einer Reifenheizform in beliebiger Weise miteinander kombiniert werden. Die speziell gestalteten bzw. verankerten Lamellenbleche werden von den Formsegmentgrenzen aus in einem Bereich von bis zu 25 %, vorzugsweise bis zu 10 %, der Umfanglänge des betreffenden Formsegmentes 1 vorgesehen. Diese Umfangslänge wird an der Innenfläche der Formsegmente 1 ermittelt. Es ist möglich, lediglich an einem der beiden an eine Formsegmentgrenze 9 anschließenden Formsegmente 1 erfindungsgemäß angeordnete oder ausgeführte Lamellenbleche vorzusehen. Da die Entformungskräfte im mittleren Bereich des Laufstreifens eines vulkanisierten Reifens am größten sind, ist es vorteilhaft, vor allem in diesem Bereich der Reifenheizform, insbesondere in einem Bereich, der bis zu 75 %, bevorzugt 60 % und besonders bevorzugt 40 %, der Breite des Laufstreifens (Breite des bodenberührenden Teils des Laufstreifens) beträgt, eine oder mehrere der erfindungsgemäßen Maßnahmen zu treffen. Des Weiteren ist es günstig, eine oder mehrere der erfindungsgemäßen Maßnahmen an jenen Teilen der Reifenheizform, die Profilpositive, die einen CCB beinhalten, ausformen, vorzusehen.

### Bezugsziffernliste

- 1: Formsegment
- 2: Segmentring
- 3: Seitenwandschale
- 4, 4': Formsteg
- 5, 5', 5", 5'": Lamellenblech
- 6: Profilblock
- 7: Querrille
- 8, 8', 8": Einschnitt
- 9: Formsegmentgrenze
- 10: Erhebung
- 11: Verdickung
- b: Breite
- 1,1': Erstreckungslänge
- P: Auszugsrichtung
- R: radiale Richtung
- α: Winkel

## Patentansprüche

1. Reifenheizform mit einem Segmentring (2), welcher aus mindestens sechs Formsegmenten (1) zusammengesetzt ist, in welchen Lamellenbleche (5, 5',5 ", 5"') verankert sind, die im Laufstreifen eines Fahrzeugluftreifens schmale Einschnitte (8, 8') mit einer Breite von 0,4 mm bis 0,8 mm ausformen, die sich unter Winkeln ≤ 45° zur axialen Richtung im Laufstreifen erstrecken, wobei die Formsegmente (1) in ihrer Mitte zum Öffnen und Schließen in radialer Richtung (R) bewegbar sind,
**dadurch gekennzeichnet,**
**dass** nahe von Formsegmentgrenzen (9) in einem Bereich von bis zu 25% der Umfangslänge des betreffenden Formsegmentes (1), ermittelt ab der Formsegmentgrenze, Lamellenbleche (5',5", 5"') angeordnet sind, die im Vergleich zu den ansonsten in der Reifenheizform bzw. im betreffenden Formsegment (1) verankerten Lamellenblechen (5) eines oder mehrere der folgenden Merkmale aufweisen:
∘ eine geringere Kontaktfläche zum Laufstreifengummi,
∘ ein flexibleres Material,
∘ eine flexible Verankerung im Formsegment (1),
∘ eine Verdickung (11) an ihrem freien Endabschnitt.

2. Reifenheizform nach Anspruch 1, **dadurch gekennzeichnet, dass** ein Lamellenblech (5') mit einer geringeren Kontaktfläche zum Laufstreifengummi kürzer ausgeführt ist als die ansonsten vorgesehenen Lamellenbleche (5).

3. Reifenheizform nach Anspruch 2, **dadurch gekennzeichnet, dass** das Lamellenblech (5') um mindestens 20 %, insbesondere um bis zu 40 %, kürzer ausgeführt ist.

4. Reifenheizform nach Anspruch 1, **dadurch gekennzeichnet, dass** ein Lamellenblech mit einer geringeren Kontaktfläche zum Laufstreifengummi geringer strukturiert ist als die ansonsten vorgesehenen Lamellenbleche (5).

5. Reifenheizform nach Anspruch 4, **dadurch gekennzeichnet, dass** das geringer strukturierte Lamellenblech geringer oder gar nicht geprägt ist.

6. Reifenheizform nach Anspruch 1, **dadurch gekennzeichnet, dass** ein Lamellenblech mit einer geringeren Kontaktfläche zum Laufstreifengummi eine kleinere Erstreckungslänge (1) im Profilpositiv aufweist als die ansonsten vorgesehenen Lamellenbleche.

7. Reifenheizform nach Anspruch 6, **dadurch gekennzeichnet, dass** die Erstreckungslänge (1) um mindestens 20 %, insbesondere um bis zu 40 %, kleiner ist als jene der ansonsten vorgesehenen Lamellenbleche.

8. Reifenheizform nach Anspruch 1, **dadurch gekennzeichnet, dass** ein Lamellenblech aus einem flexibleren Material aus einem flexiblen bzw. elastischen Kunststoff besteht.

9. Reifenheizform nach Anspruch 1, **dadurch gekennzeichnet, dass** die Verdickung (11) im Querschnitt des Lamellenbleches (5"') tropfenförmig oder dreieckig ausgeführt ist und eine Breite von 1 mm bis 2 mm aufweist.

10. Reifenheizform nach einem der Ansprüche 1 bis 9, **dadurch gekennzeichnet, dass** ein nahe einer Formsegmentgrenze (9) angeordnetes Lamellenblech (5',5", 5"') ein Lamellenblech (5',5", 5"') ist, welches in einem Bereich von bis zu 15 %, der Umfangslänge eines Formsegmentes (1), ermittelt ab der Formsegmentgrenze (9), positioniert ist.

## Claims

1. Tyre heating mould comprising a segmented ring (2), which is made up of at least six mould segments (1), anchored in which are knife blades (5, 5', 5" 5"'), which form narrow sipes (8, 8') in the tread of a pneumatic vehicle tyre that have a width of 0.4 mm to 0.8 mm and extend in the tread at angles of ≤ 45° to the axial direction, the mould segments (1) being movable in their middle for opening and closing in a radial direction (R),
**characterized**
**in that** arranged near mould segment boundaries (9) in a range of up to 25% of the circumferential length of the mould segment (1) concerned, determined from the mould segment boundary, are knife blades (5', 5" 5"') which in comparison with the knife blades (5) that are otherwise anchored in the tyre heating mould or in the mould segment (1) concerned have one or more of the following features:
∘ a smaller contact area with respect to the tread rubber,
∘ a more flexible material,
∘ a flexible anchorage in the mould segment (1),
∘ a thickening (11) at their free end portion.

2. Tyre heating mould according to Claim 1, **characterized in that** a knife blade (5') with a smaller contact area with respect to the tread rubber is made shorter than the knife blades (5) otherwise provided.

3. Tyre heating mould according to Claim 2, **characterized in that** the knife blade (5') is made shorter by at least 20%, in particular by up to 40%.

4. Tyre heating mould according to Claim 1, **characterized in that** a knife blade with a smaller contact area with respect to the tread rubber is structured less than the knife blades (5) otherwise provided.

5. Tyre heating mould according to Claim 4, **characterized in that** the less-structured knife blade is embossed less or not at all.

6. Tyre heating mould according to Claim 1, **characterized in that** a knife blade with a smaller contact area with respect to the tread rubber has a smaller length of extent (1) in the profile positive than the knife blades otherwise provided.

7. Tyre heating mould according to Claim 6, **characterized in that** the length of extent (1) is smaller by at least 20%, in particular by up to 40%, than that of the knife blades otherwise provided.

8. Tyre heating mould according to Claim 1, **characterized in that** a knife blade consists of a more flexible material of a flexible or elastic plastic.

9. Tyre heating mould according to Claim 1, **characterized in that** the thickening (11) in the cross section of the knife blade (5'") is made in the form of a drop or triangular and has a width of 1 mm to 2 mm.

10. Tyre heating mould according to one of Claims 1 to 9, **characterized in that** a knife blade (5', 5" 5"') arranged near a mould segment boundary (9) is a knife blade (5', 5'' 5"') that is positioned in a range of up to 15% of the circumferential length of a mould segment (1), determined from the mould segment boundary (9).

## Revendications

1. Moule de chauffage de pneumatique avec un anneau segmenté (2), qui est composé d'au moins six segments de moule (1), dans lesquels sont ancrées des lamelles de tôle (5, 5', 5", 5"'), qui forment dans la bande de roulement d'un pneumatique de véhicule des entailles étroites (8, 8') d'une largeur de 0,4 mm à 0,8 mm, qui s'étendent sous des angles ≤ 45° par rapport à la direction axiale dans la bande de roulement, dans lequel les segments de moule (1) sont mobiles en direction radiale (R) dans leur milieu pour l'ouverture et la fermeture, **caractérisé en ce que** des lamelles de tôle (5', 5", 5"') sont disposées à proximité de limites (9) de segments de moule dans une région allant jusque 25 % de la longueur périphérique du segment de moule concerné (1), déterminée à partir de la limite du segment de moule, lesquelles présentent, par comparaison avec les autres lamelles de tôle (5) ancrées dans le moule de chauffage de pneumatique ou dans le segment de moule concerné (1), une ou plusieurs des caractéristiques suivantes:
∘ une plus petite surface de contact avec la gomme de la bande de roulement,
∘ un matériau plus flexible,
∘ un ancrage flexible dans le segment de moule (1),
∘ une surépaisseur (11) à leur partie d'extrémité libre.

2. Moule de chauffage de pneumatique selon la revendication 1, **caractérisé en ce qu'**une lamelle de tôle (5') avec une plus petite surface de contact avec la gomme de la bande de roulement est plus courte que les lamelles de tôle prévues par ailleurs (5).

3. Moule de chauffage de pneumatique selon la revendication 2, **caractérisé en ce que** la lamelle de tôle (5') est plus courte d'au moins 20 %, en particulier de jusque 40 %.

4. Moule de chauffage de pneumatique selon la revendication 1, **caractérisé en ce qu'**une lamelle de tôle avec une plus petite surface de contact avec la gomme de la bande de roulement est moins structurée que les lamelles de tôle prévues par ailleurs (5).

5. Moule de chauffage de pneumatique selon la revendication 4, **caractérisé en ce que** la lamelle de tôle moins structurée est moins ou n'est pas gaufrée.

6. Moule de chauffage de pneumatique selon la revendication 1, **caractérisé en ce qu'**une lamelle de tôle avec une plus petite surface de contact avec la gomme de la bande de roulement présente une plus petite longueur d'extension (1) dans le profil positif que les lamelles de tôle prévues par ailleurs.

7. Moule de chauffage de pneumatique selon la revendication 6, **caractérisé en ce que** la longueur d'extension (1) est plus courte d'au moins 20 %, en particulier de jusque 40 %, que chacune des lamelles de tôle prévues par ailleurs.

8. Moule de chauffage de pneumatique selon la revendication 1, **caractérisé en ce qu'**une lamelle de tôle en un matériau plus flexible se compose d'une matière plastique flexible ou élastique.

9. Moule de chauffage de pneumatique selon la revendication 1, **caractérisé en ce que** la surépaisseur (11) est réalisée, dans la section transversale de la lamelle de tôle (5'"), en forme de goutte ou de triangle et présente une largeur de 1 mm à 2 mm.

10. Moule de chauffage de pneumatique selon l'une quelconque des revendications 1 à 9, **caractérisé en ce qu'**une lamelle de tôle (5', 5", 5"') disposée à proximité d'une limite de segment de moule (9) est une lamelle de tôle (5', 5", 5"') qui est positionnée dans une région allant jusque 15 % de la longueur périphérique d'un segment de moule (1), déterminée à partir de la limite de segment de moule (9).
